# EUROPEAN PATENT APPLICATION

(11) **EP 2 392 917 A1**
(43) Date of publication of application: **07.12.2011**
(21) Application number: 10290085.9
(22) Date of filing: 19.02.2010
(51) Int. Cl.: G01N 21/64, G01T 1/10

(54) **Optically stimulated luminescence radiation measurement device**

(71) Applicant: Services Pétroliers Schlumberger, 75007 Paris (FR); Schlumberger Technology B.V., 2514 JG The Hague (NL); Schlumberger Holdings Limited, Tortola (VG); Prad Research And Development Limited, Tortola (VG)
(72) Inventor: Saenger, Richard, 92320 Chatillon (FR)
(74) Representative: Vandermolen, Mathieu

(57) **Abstract**

A device is presented to measure radiation in a well drilled in a geological formation. The device comprises at least one sensing arrangement, a light source, and a light sensor. The sensing arrangement comprises an optically stimulated luminescence material arranged to be positioned near a zone of interest such as to accumulate radiation emitted by the zone of interest over a defined accumulation delay. The light source is arranged to optically stimulate emission of a luminescence light by the sensing arrangement with a stimulation light according to a first wavelength range. And the light sensor is arranged to measure the luminescence light emitted by the sensing arrangement according to another wavelength range, a measured intensity of the luminescence light related to the accumulated radiation.

## Description

### TECHNICAL FIELD

An aspect of the present invention relates to a device using optically stimulated luminescence to measure radiation. The optically stimulated luminescence radiation measuring device may be used in oilfield related applications, for example, to measure radiation of a geological formation surrounding a well that has been drilled for the purpose of hydrocarbon exploration and production.

### BACKGROUND OF THE INVENTION

It is known to measure ionizing radiation like gamma-ray with a Geiger counter or a spectrometer. Typically, a spectrometer comprises an energy-sensitive radiation detector (sodium iodide Nal scintillation counter or a high-purity germanium detector), a pulse sorter, amplifiers, and measurement processing unit. This requires electronic components and electrical power at the location where the measurements are performed. In oilfield related applications, such radiation measuring devices must be placed downhole to measure the radiation emitted by the geological formation surrounding the well that has been drilled. Providing electrical power and complex electronic circuits downhole to reliably measure radiation for a long period of time, for example in permanent reservoir monitoring application, is often difficult to achieve due to the harsh environment affecting the electronic circuit's dependability, and due to the lack of available space to store batteries having an adapted capacity and a lifetime compliant with said application. Moreover, such electronic circuits and batteries are costly and subject to maintenance in order to maintain the measurement accuracy and limit failures. Furthermore, the accuracy of concurrent, separate radiation measurements over a long period can be called into question based on the exact calibration of the existing radiation measuring devices at each instance of measurement.

### SUMMARY OF THE INVENTION

It is an object of the present invention to propose a radiation measuring device that overcomes one or more of the limitations of the existing radiation measuring device.

According to one aspect of the present invention, there is provided a device to measure radiation in a well drilled in a geological formation, comprising:
- at least one sensing arrangement comprising an optically stimulated luminescence material arranged to be positioned near a zone of interest such as to accumulate radiation emitted by the zone of interest over a defined accumulation delay;
- a light source arranged to optically stimulate emission of a luminescence light by the at least one sensing arrangement with a stimulation light according to a first wavelength range; and
- a light sensor arranged to measure the luminescence light emitted by the at least one sensing arrangement according to another wavelength range, a measured intensity of the luminescence light being related to the accumulated radiation.

The radiation measuring device may further comprise a processing unit coupled to the light source and controlling the light source operation such as to define the accumulation delay.

The processing unit may be further coupled to the light sensor and estimates an intensity of the accumulated radiation based on the measured intensity of the luminescence light and calibration data stored in a memory of the processing unit.

The light source and the light sensor may be coupled to the at least one sensing arrangement by an optical fiber arrangement.

The radiation measuring device may further comprise a multiplexer for multiplexing a plurality of sensing arrangements on the optical fiber arrangement.

The optically stimulated luminescence material is selected from the group of material consisting of MgS doped with a rare earth, BaS doped with a rare earth, SrS doped with a rare earth, SrSe doped with a rare earth, αAl2O3, Al2O3:C, quartz, phosphors, BeO, CaF2:Mn and CaS04.

The at least one sensing arrangement may further comprise a converting layer so as to convert non-ionizing radiation into ionizing radiation.

The at least one sensing arrangement may comprise the optically stimulated luminescence material surrounding and contacting an optical fiber portion.

The at least one sensing arrangement may comprise the optically stimulated luminescence material sprayed on a support.

The at least one sensing arrangement may comprise the optically stimulated luminescence material forming a core embedded in an optical fiber portion.

A plurality of sensing arrangements may be disposed according to a matrix for defining a two-dimensional image of the zone of interest.

The at least one sensing arrangement may be disposed on an arm or a pad.

The at least one sensing arrangement may further comprise a window selective to a defined radiation wavelengths range.

According to another aspect of the present invention, there is provided a method of measuring radiation comprising:
- an accumulation step in which a radiation measuring device as defined herein is placed in an environment in which radiation is to be measured over a defined accumulation delay;
- a light injecting step in which stimulation light is directed towards the at least one sensing arrangement, so as to optically stimulate emission of a luminescence light; and
- a measurement step in which a measured intensity of the luminescence light that varies as a function of radiation accumulated in the optically stimulated luminescence material of the radiation measuring device is measured.

The light injecting and measurement steps may be performed after the defined accumulation delay has lapsed.

The intensity of the accumulated radiation may be estimated based on the measured intensity of the luminescence light and calibration data.

The radiation measuring device of the present invention using an optically stimulated luminescence material can accumulate radiation over variable amounts of time. Thus, it enables "memorizing" nuclear events over a given and adjustable period of time. Advantageously, the period of time between two successive readouts of the accumulated radiation in the optically stimulated luminescence material of the sensing arrangement may range from seconds to months.

The sensing arrangement of the radiation measuring device of the present invention may advantageously be a passive sensor that can be remotely operated. It does not need any permanent electrical power, or in-situ electronic components. It can be operated for a long period of time. It is substantially maintenance free and power free at the location where harsh conditions of the sensing arrangement can be encountered, thus improving reliability and accuracy of the radiation measuring device.

Other advantages will become apparent from the hereinafter description of the present invention.

### BRIEF DESCRIPTION OF THE DRAWINGS

The present invention is illustrated by way of examples and not limited to the accompanying drawings, in which like references indicate similar elements:
- Figure 1 schematically shows an embodiment of a radiation measuring device;
- Figures 2A and 2B schematically illustrate the principle of optically stimulated luminescence;
- Figures 3A, 3B, 4A and 4B schematically illustrate the continuous and the pulsed mode of operation of the radiation measuring device;
- Figures 5, 6 and 7 schematically show different embodiments of the radiation measuring device;
- Figures 8, 9 and 10 schematically illustrate different embodiments of a sensing arrangement of the radiation measuring device;
- Figure 11 schematically shows an onshore hydrocarbon well location with several radiation measuring devices deployed for permanent monitoring;
- Figure 12 illustrates a logging application of the radiation measuring device;
- Figures 13A and 13B illustrate a drilling and measurement application of the radiation measuring device; and
- Figures 14A and 14B illustrate an imaging application of the radiation measuring device.

### DETAILED DESCRIPTION OF THE INVENTION

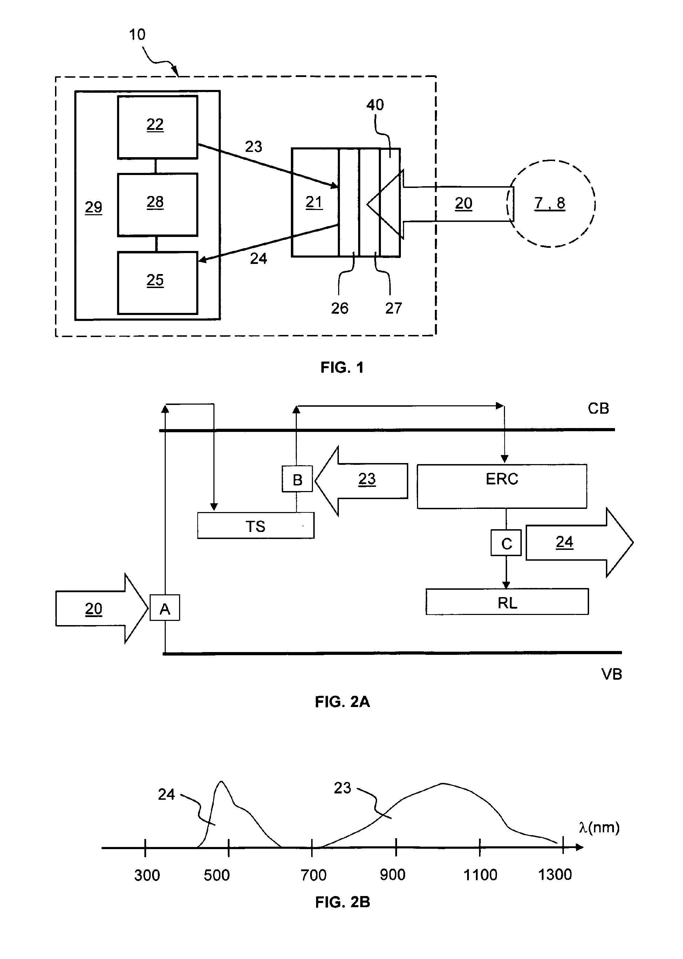

Figure 1 schematically shows an embodiment of a device to measure radiation in a well drilled in a geological formation. In a preferred embodiment, the radiation measuring device comprises a sensing arrangement 21 for sensing radiation, and an operating arrangement 29 for controlling the operation of the sensing arrangement 21.

The sensing arrangement 21 comprises an optically stimulated luminescence material 26. The sensing arrangement 21 has been positioned in an environment where radiation 20 is to be measured over a defined accumulation delay. More precisely, the optically stimulated luminescence material 26 has been positioned near a zone of interest 7, 8 such as to accumulate radiation 20 emitted by said zone of interest 7, 8 over said delay.

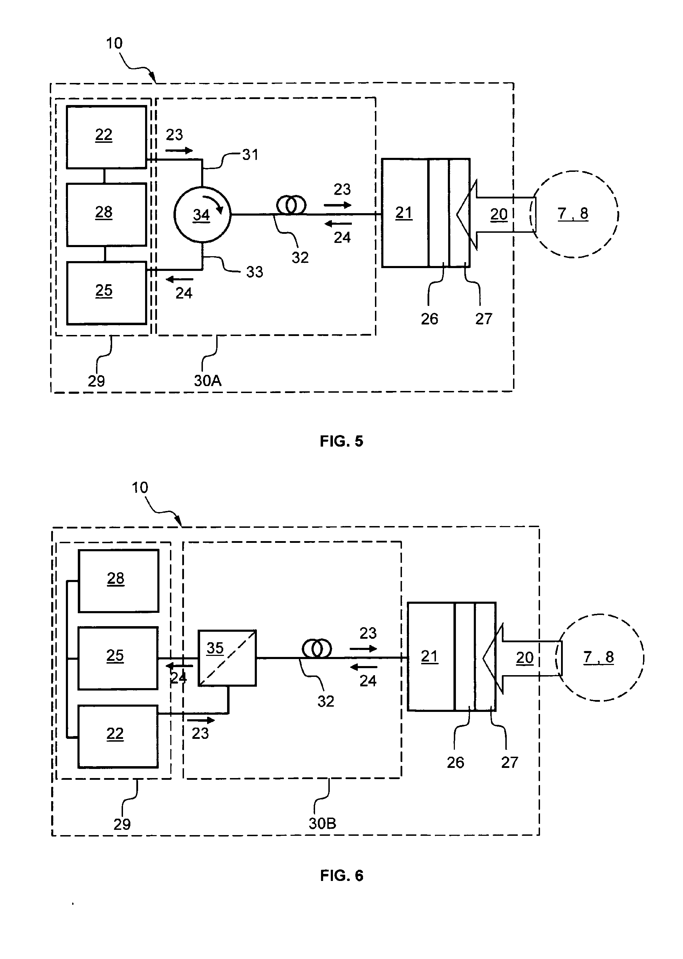

The operating arrangement 29 comprises a light source 22, a light sensor 25 and a processing unit 28. The light source 22 may submit the sensing arrangement 21 to a stimulation light 23. The stimulation light 23 optically stimulates emission of a luminescence light 24 by the optically stimulated luminescence material 26 of the sensing arrangement 21. The stimulation light 23 has a spectrum covering a first wavelength range that is adapted to stimulate emission of the luminescence light 24 of the material 26 employed in the sensing arrangement 21. The stimulation light 23 is provided to the sensing arrangement 21 during a stimulation delay. The luminescence light 24 has a spectrum covering another wavelength range that is different from the first wavelength range. The luminescence light 24 is provided to the light sensor 25 that measures the luminescence light 24 emitted by the sensing arrangement 21. More precisely, the light sensor 25 measures an intensity of the luminescence light 24 that is related to the accumulated radiation 20. The stimulation light 23 and the luminescence light 24 may be conveyed either in the air, or through light guides, or through two optical fibers. Other embodiments where these lights are conveyed through a single optical fiber will be described in detail hereinafter with respect to Figures 5, 6 and 7.

The processing unit 28 is preferably adapted to control the operation of the light source 22 and the light sensor 25 with respect to the accumulation delay and the stimulation delay. The processing unit 28 also estimates the radiation 20 emitted by the zone of interest 7, 8 based on the measured intensity of the luminescence light 24. The processing unit 28 may also estimate said radiation 20 based on calibration data stored in a memory (not shown).

The sensing arrangement 21 may further comprise a converting layer 27 so as to convert non-ionizing radiation (e.g., neutron) into ionizing radiation (e.g., gamma-ray). Advantageously, the converting layer 27 contacts the optically stimulated luminescence material 26 and is exposed to the non-ionizing radiation.

The sensing arrangement 21 may further comprise a window 40 selective to a defined radiation wavelength range. For example, the window can be made of a material acting as a band pass filter for the radiation 20. As such, only determined radiation having a determined wavelength would be accumulated by the sensing arrangement 21.

Figure 2A schematically illustrates the principle of optically stimulated luminescence that gain advantages of electrons trapped between the valence band VB and conduction band CB in the crystalline structure of optically stimulated luminescence material. The trapping sites TS are imperfections of the lattice, namely impurities or defects. An ionizing radiation 20 produces electron-hole pairs wherein the electrons are in the conduction band CB and the holes are in the valence band VB. The electrons which have been excited to the conduction band CB may become entrapped in the electron or hole traps (step A). These traps TS correspond to stable intermediate energy levels. The optically stimulated luminescence material may accumulate entrapped electron over a long period of time. When the material is submitted to a stimulation light 23, the entrapped electrons free themselves from the trap TS and move to the conduction band CB (step B). The light stimulation is performed during a stimulation delay sufficiently long to free most of the entrapped electrons, namely a delay necessary for annealing the emission of luminescence light 24. From the conduction band CB they may recombine with holes trapped in hole traps also referred to as a radiative recombination center ERC into recombination level RL above the valence band VB, and a luminescence light 24 is concomitantly emitted (step C). The intensity of the luminescence light 24 is proportional to the "freed" electrons, thus to the accumulated radiation.

The stimulation delay, also called resetting time required to stimulate the optically stimulated luminescence material back to its initial state is inversely proportional to the intensity of the stimulation light 23. However, it is possible to reduce the stimulation delay by increasing the intensity of the stimulation light 23.

The optically stimulated luminescence material 26 sensitive to ionizing radiation 20 (e.g., gamma-ray) may be any suitable material that preferably retains its optical luminescence in harsh environments (e.g., above 100°C), such as MgS doped with a rare earth, BaS doped with a rare earth, SrS doped with a rare earth, SrSe doped with a rare earth, αAlO₃, Al₂O₃:C and quartz. Advantageously, the rare earth doping impurities may be Sm, Eu, Ce or the like.

Taking Al₂O₃:C as an example, it is to be noted on the one hand that the material response is linear with the radiation dose to which it is exposed from 0.1 mGy to 100 mGy (range equivalent to from 10 mREM to 10 REM), and on the other hand that both the emission of luminescence light 24 as well as the material response to radiation dose saturates above a level of the order of 20 Gy.

The optically stimulated luminescence material 26 sensitive to non-ionizing radiation (e.g., neutron) may be phosphors, BeO, CaF₂:Mn and CaSO₄.

The converting layer 27 may be made of Boron oxide B₂O₃ or lithium drifted glass.

Figure 2B illustrates the wavelength range of the stimulation light 23 and the wavelength range of the emitted luminescence light 24 for Al₂O₃:C. The emitted luminescence light 24 has a shorter wavelength than the stimulation light 23.

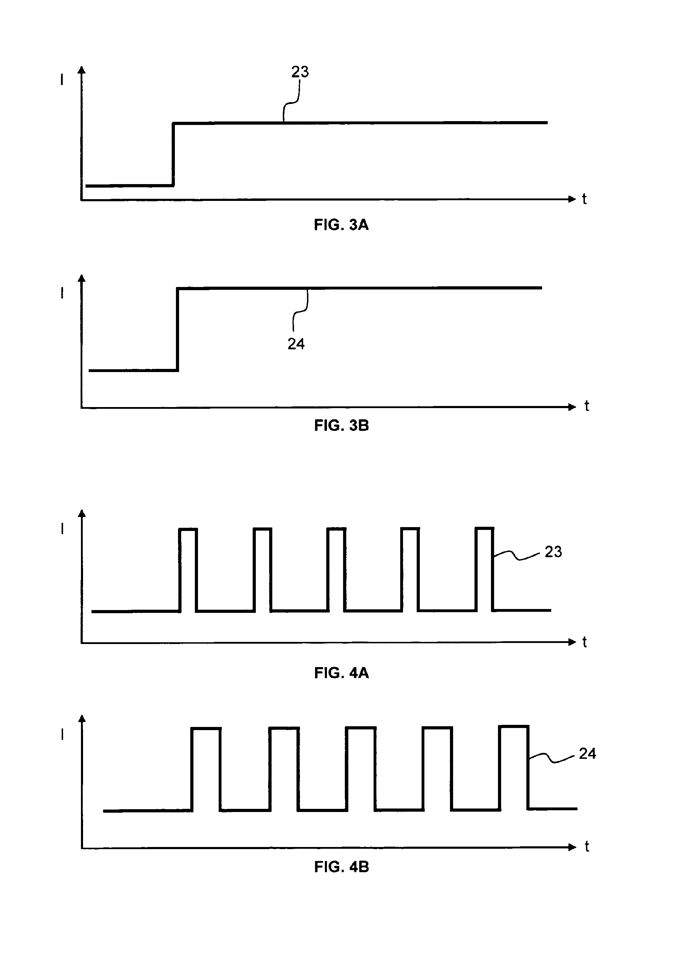

As seen hereinbefore, the wavelength of the stimulation light 23 and the luminescence light 24 in the optically stimulated luminescence material 26 are well distinguished, in particular in Al2O3:C crystals. Thus, it is possible to operate the radiation measuring device according to a continuous mode or a pulsed mode. Figures 3 and 4 schematically illustrate the intensity of the stimulation light 23 (Figs. 3A and 4A) and of the luminescence light 24 (Figs. 3B and 4B) as a function of time according to the continuous mode and the pulsed mode, respectively. In the continuous mode, the stimulation light 23 and the luminescence light 24 occur substantially simultaneously. In the pulsed mode, the stimulation light 23 is emitted with pulse widths of the order of 100 µs and a frequency in the order of kilo-Hertz resulting in the emission of the luminescence light 24, which is also in a pulsed fashion with pulse widths of the order of ten or so micro-seconds. The stimulation delay for annealing the emission of luminescence light 24 is of the order of 100 s. The pulsed mode enables removing the bias introduced by a slow phosphorescence induced in said material, and also reducing the temperature dependence of the luminescence in said material. The pulsed mode is particularly advantageous with respect to Al2O3:C crystals.

Figures 5, 6 and 7 schematically show three other embodiments of a device 10 to measure radiation 20 emitted by the zone of interest 7, 8 of a geological formation 2.

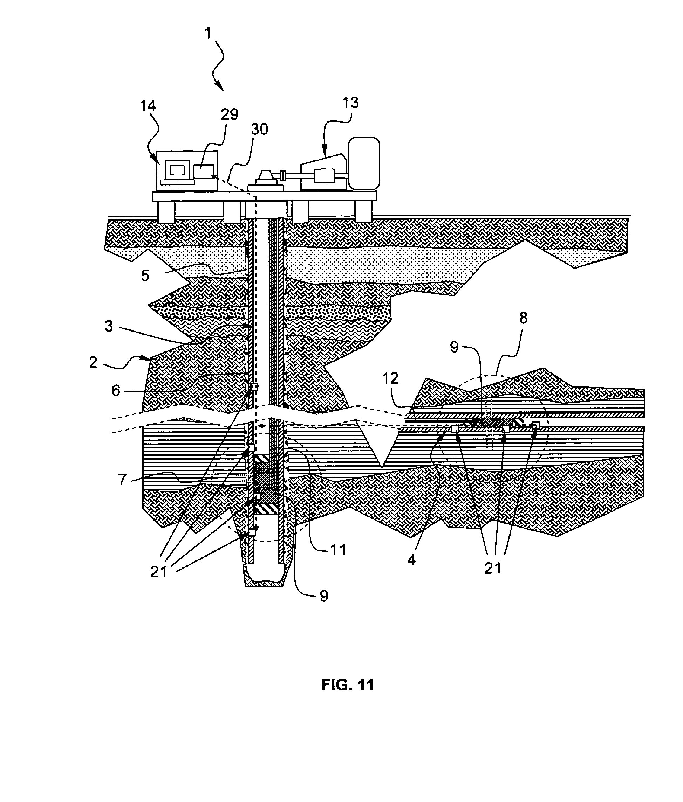

These embodiments differ from the embodiment of Figure 1 in that the operating arrangement 29, namely the light source 22, the light sensor 25 and the processing unit 28 are positioned remotely from the sensing arrangement 21, and in that the stimulation light 23 and the luminescence light 24 are conveyed at least over a long portion on a single optical fiber. As an example, the operating arrangement 29 may be positioned in the surface equipment 14 (see Figure 11).

In the embodiment of Figure 5, the sensing arrangement 21 is coupled to the operating arrangement 29 through a first optical fiber arrangement 30A. The first optical fiber arrangement 30A comprises a first optical fiber portion 31, a second optical fiber portion 32, a third optical fiber portion 33, and a circulator 34. The first 31 and second 32 optical fiber portion convey the stimulation light 23 from the light source 22 to the sensing arrangement 21 through the circulator 34. The second 32 and third 33 optical fiber portion convey the luminescence light 24 from the sensing arrangement 21 to the light sensor 25 through the circulator 34. Advantageously, the circulator 34 may be positioned near the operating arrangement 29.

In the embodiment of Figure 6, the sensing arrangement 21 is coupled to the operating arrangement 29 through a second optical fiber arrangement 30B. The second optical fiber arrangement 30B comprises an optical fiber portion 32 and separator arrangement 35. The separator arrangement 35 may comprise a wavelength separator and a mirror. Advantageously, the separator arrangement 35 may be positioned near the operating arrangement 29.

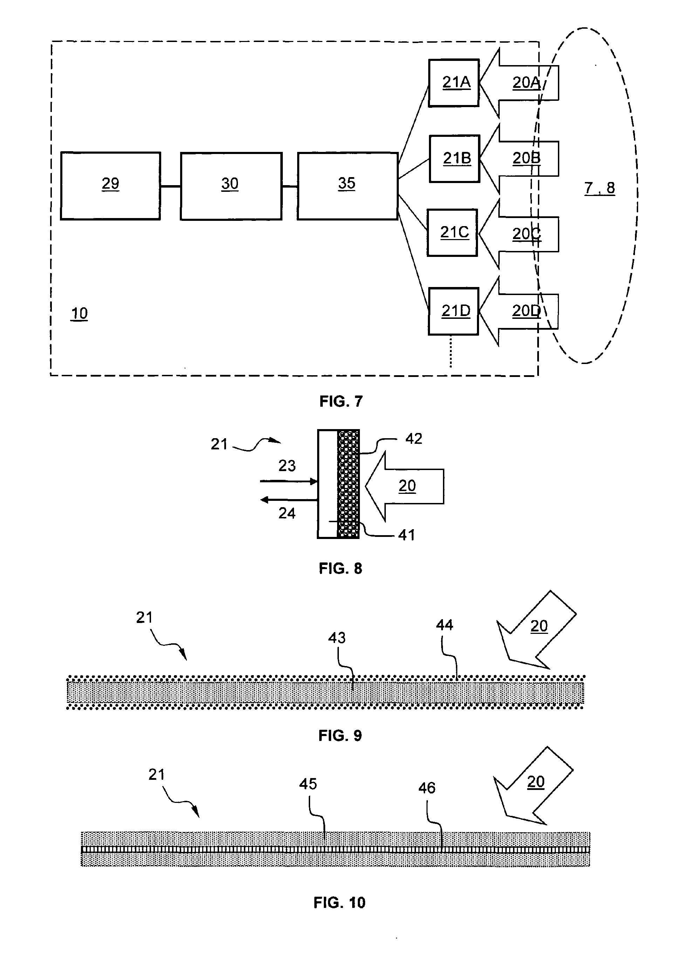

In the embodiment of Figure 7, a plurality of sensing arrangements 21A, 21 B, 21C, 21D are positioned in an environment where radiation 20A, 20B, 20C, 20D is to be measured, respectively, and are coupled to the operating arrangement 29 through an optical fiber arrangement 30 by means of an optical multiplexer 35. The optical fiber arrangement 30 may be any of the one described in relation with Figures 5 or 6.

Figures 8, 9 and 10 schematically illustrate three embodiments of a sensing arrangement 21 of a radiation measuring device 10.

Figure 8 shows a sensing arrangement 21 comprising a layer 42 of optically stimulated luminescence material on a supporting layer 41. Advantageously, the supporting layer 41 is made of a material enabling transmission of the stimulation 23 and luminescence 24 lights. Further, the supporting layer 41 may, or may not be, transparent to the radiation 20. As an example, several pellets made of Al2O3:C can be placed adjacent to each other on a glass supporting layer. The sensing arrangement 21 may have a surface of a few square-centimeters. As another example, Al2O3:C crystal can be crushed into powder with a grain size of the order of a few nano-meters to a few micro-meters and thermally sprayed onto the supporting layer 41. Further, the layer 42 may be coated with an appropriate Al coating (not shown) deposited though phase vapor deposition PVD process. The coating enables optimizing the light collection within the layer 42 of optically stimulated luminescence material.

Figure 9 shows a sensing arrangement 21 comprising a layer 44 of optically stimulated luminescence material surrounding and contacting an optical fiber 43. Seeding the optical fiber 43 with a powder of optically stimulated luminescence material is advantageous because it enables having a direct contact between said material and the optical fiber conveying the stimulation 23 and luminescence 24 lights. The layer 44 of optically stimulated luminescence material can be seeded onto the optical fiber 43 by means of for example electrostatic sputtering or phase vapor deposition PVD process. As an example, Al2O3:C crystal crushed into powder with a grain size of the order of a few nano-meters to a few micro-meters can be used. The optical fiber supporting said material may be plastic fiber for environment with temperature below 100°C or quartz optical fiber for environment with temperature above 100°C. The sensing arrangement length may range from a few centimeters to a few kilometers. A coating as described with respect to the embodiment of Figure 8 can also be applied on said material. It can be easily coupled to the optical fiber arrangement 30.

Figure 10 shows a sensing arrangement 21 comprising a core 46 of optically stimulated luminescence material embedded in an optical fiber 45. During the manufacturing process, a hollow optical fiber is filled in with optically stimulated luminescence material under the form of a powder, then extruded and drawn to the proper dimension.

Various hydrocarbon exploration and production related applications of the radiation measuring device will be described hereinafter with respect to Figures 10, 11, 12 and 13.

Figure 11 illustrates a permanent well monitoring application wherein several radiation measuring devices 10 are positioned at various locations in the well. Figure 11 schematically shows an onshore hydrocarbon well location and equipments 1 above a hydrocarbon geological formation 2 after drilling operation has been carried out, after a drill pipe has been run, and after cementing, completion and perforation operations have been carried out. The well is beginning to produce hydrocarbons, e.g., oil and/or gas. At this stage, the well bore comprises substantially vertical portion 3 and may also comprise horizontal or deviated portion 4. The well bore 3, 4 is either an uncased borehole, or a cased borehole comprising a casing 5 and an annulus 6, or a mix of uncased and cased portions.

The annulus 6 may be filled with cement or an open-hole completion material, for example gravel pack. Downhole, a plurality of producing sections 11, 12 of the well typically comprises perforations, production packers and production tubing at a depth corresponding to a reservoir, namely hydrocarbon-bearing zones of the hydrocarbon geological formation 2. A fluid mixture 9 flows from the geological formation 2 into the borehole. In the present example, the fluid mixture is a hydrocarbon fluid mixture that may comprise oil, gas and/or water.

At the surface, the production tubings are coupled to appropriate surface production arrangement 13 typically comprising pumping arrangement, separator and tank, etc. Surface equipment 14 may comprise a computer forming a control and data acquisition unit coupled to the radiation measuring devices 10 of the present invention, and/or to other downhole sensors and/or to active completion devices like valves. Surface equipment 14 may also comprise a satellite link (not shown) to transmit data to a client's office. Surface equipment 14 may be managed by an operator. The precise design of the down-hole producing section and surface production/control arrangement/equipment is not germane to the present invention, and thus is not described in detail hereinafter.

The radiation measuring devices 10 may be positioned in the vertical portion 3, or in the horizontal or deviated portion 4, in uncased borehole portion, or in cased borehole portion, in the annulus 6, or within the bore hole, or within the production tubing, or the like. All the radiation measuring devices 10 may form a network of said devices to monitor (over a long period of time) the radiation 20 emitted by a determined zone of interest 7, 8. The sensing arrangement 21 of each radiation measuring device 10 may be positioned downhole close to said zones of interest 7, 8 so as to accumulate the gamma-ray or neutron radiation. Preferably, in this application, the sensing arrangement 21 is remotely connected to the operating arrangement 29 through optical fibers 30. The sensing arrangement 21 positioned downhole in a harsh environment is a passive part of the radiation measuring device. The passive part does not require electrical power and remain in situ without requiring any maintenance. The operating arrangement positioned at the surface or near the surface is an active part of the radiation measuring device. The active part requires electrical power and maintenance which is relatively easy to achieve in a cost efficient manner at the surface.

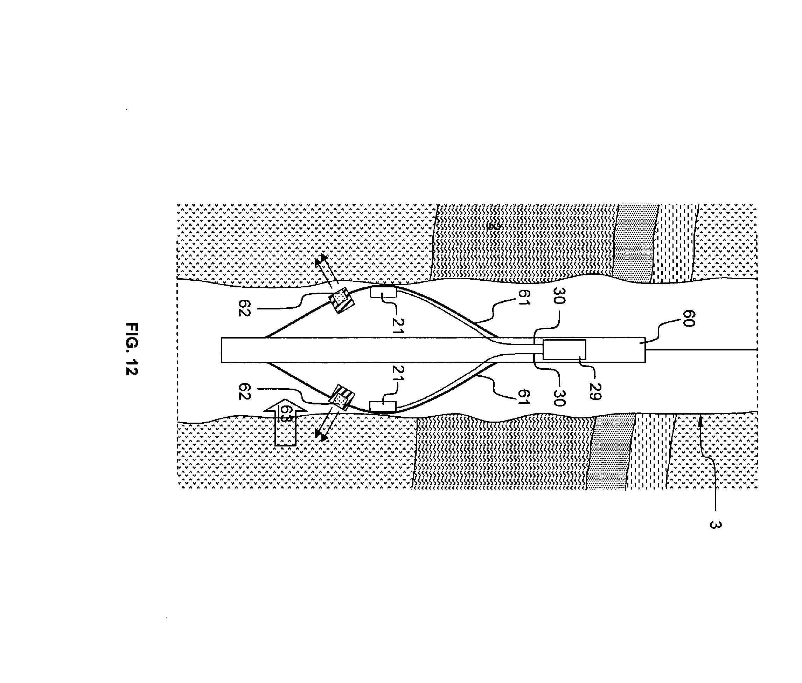

Figure 12 illustrates a logging application wherein the radiation measuring devices 10 are deployed by a logging sonde 60. Typically, the logging sonde 60 comprises a body coupled to a surface rig and a drawworks by a wireline cable and may be lowered downhole in the well bore at any desired depth. The precise design of the logging sonde 60 and surface rig and a drawworks is not germane to the present invention, and thus is not shown on Figure 12 and described in detail hereinafter. The logging sonde 60 comprises several arms 61 under the form of, for example, a bow spring that may be deployed to contact the wall of the bore hole 3 when the logging sonde 60 has been lowered at the desired depth. The logging sonde 60 comprises at least one radiation measuring device. For example, at least one sensing arrangement 21 may be mounted at each arm 61. The operating arrangement 29 may be positioned in the body of the logging sonde 60 and coupled to the sensing arrangement 21 by means of an optical fiber 30 in or along the arm 61 (as depicted). Alternatively, the operating arrangement 29 may be positioned at the surface, the wireline cable comprising an optical fiber for coupling the sensing arrangement 21 to the operating arrangement 29 (not shown). In this application, the sensing arrangement 21 may accumulate radiation 20 of the zone of interest 7, 8 surrounding the borehole at the desired depth. It may detect natural gamma-rays emitted from the formation, for example, shale for correlation purposes or shale determination. The logging sonde 60 may also comprise at least one radioactive source 62 mounted on the arm 61 for irradiating the fluid mixture flowing into the bore hole. In this case, the sensing arrangement 21 may accumulate radiation 20 related to the irradiated fluid mixture 63 filling the bore hole 3. The radioactive source 62 may be a weak radioactive source, e.g., a 500 keV gamma-ray source. This enables measuring the variation of the fluid mixture response related to the photoelectric factor or the density of the fluid mixture. Typically, the variation measurement can be used to determine for example an excess of water in a hydrocarbon fluid mixture 63 flowing out of the geological formation 2 into the bore hole 3.

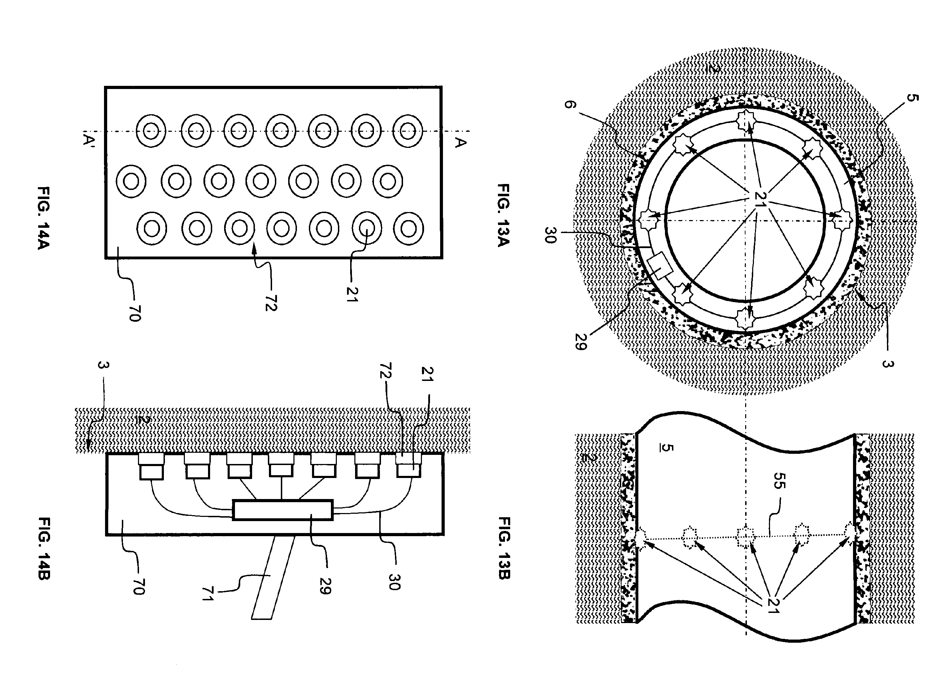

Figures 13A and 13B illustrate a drilling and measurement application wherein the radiation measuring devices are positioned within the casing 5. Figure 13A shows a top cross-sectional view while Figure 13B shows a side cross-sectional view in geological formation 2 and a cased borehole 3 where the annulus 6 is filled with open-hole completion material or cement. The casing 5, for example a casing collar, comprises several sensing arrangements 21 positioned on a generatrix 55 of the casing collar. The sensing arrangements 21 are coupled to the operating arrangement 29 through the optical fiber arrangement 30. This application is well adapted to the accumulation of natural gamma-rays emitted from shale formations because the sensing arrangements 21 may be exposed to the same formation slab for a longer period of time once the casing collar is securely positioned downhole.

Figures 14A and 14B illustrate an imaging application wherein the radiation measuring devices form an array within a pad 70 for obtaining a two-dimensional radiation image of the zone of interest 7, 8 of a geological formation 2. The pad 70 may be connected to a logging tool (not shown) by means of a deploying arm 71. During a measurement, the pad 70 contacts the wall of the well bore 3. Several sensing arrangements 21 are embedded within the pad 70 according to a matrix or an array 72. Each sensing arrangements 21 is protected from abrasion by a window 73. The window 73 can be made of, for example, Beryllium or Boron Carbide, or Titan, or PEEK material. The pad may be made of stainless steel. The internal part of the pad comprising the sensing arrangements 21 and operating arrangement 29 may be filled with a silicone oil. Each sensing arrangement 21 is coupled to the operating arrangement 29 positioned within the pad or within the logging tool (not shown) or at the surface by means of optical fibers 30 (not shown). The pad with the array of sensing arrangements enables obtaining a pixellized radiation image of the wall of the well bore 3.

It should be appreciated that embodiments of the present invention are not limited to onshore hydrocarbon wells and can also be used offshore. Furthermore, although some embodiments have drawings showing a vertical well bore, said embodiments may also apply to a horizontal or deviated well bore. All the embodiments of the present invention are equally applicable to cased and uncased borehole (open hole). Although particular applications of the present invention relate to the oilfield industry, other applications to other industry, e.g., the mining industry, the water industry (water exploration and production) or the like also apply.

The drawings and their description hereinbefore illustrate rather than limit the present invention.

Although a drawing shows different functional entities as different blocks, this by no means excludes implementations in which a single entity carries out several functions, or in which several entities carry out a single function. In this respect, the drawings are very diagrammatic.

Any reference sign in a claim should not be construed as limiting the claim. The word "comprising" does not exclude the presence of other elements than those listed in a claim. The word "a" or "an" preceding an element does not exclude the presence of a plurality of such element.

## Claims

1. A device (10) to measure radiation (20) in a well (3) drilled in a geological formation (2), comprising:
- at least one sensing arrangement (21) comprising an optically stimulated luminescence material (26) arranged to be positioned near a zone of interest (7, 8) of the geological formation (2) such as to accumulate radiation (20) emitted by the zone of interest (7, 8) over a defined accumulation delay;
- a light source (22) arranged to optically stimulate emission of a luminescence light (24) by the at least one sensing arrangement (21) with a stimulation light (23) according to a first wavelength range; and
- a light sensor (25) arranged to measure the luminescence light (24) emitted by the at least one sensing arrangement (21) according to another wavelength range, a measured intensity of the luminescence light (24) being related to the accumulated radiation.

2. The radiation measuring device of claim 1, further comprises a processing unit (28) coupled to the light source (22) and controlling the light source (22) operation such as to define the accumulation delay.

3. The radiation measuring device of claim 1 or 2, wherein the processing unit (28) is further coupled to the light sensor (25) and estimates an intensity of the accumulated radiation based on the measured intensity of the luminescence light (24) and calibration data stored in a memory of the processing unit (28).

4. The radiation measuring device according to anyone of the claims 1 to 3, wherein the light source (22) and the light sensor (25) are coupled to the at least one sensing arrangement (21) by an optical fiber arrangement (30).

5. The radiation measuring device according to claim 4, further comprising a multiplexer (35) for multiplexing a plurality of sensing arrangements (21A, 21 B, 21C, 21 D) on the optical fiber arrangement (30).

6. The radiation measuring device according to anyone of the claims 1 to 5, wherein the optically stimulated luminescence material (26) is selected from the group of material consisting of MgS doped with a rare earth, BaS doped with a rare earth, SrS doped with a rare earth, SrSe doped with a rare earth, αAl₂O₃, Al₂O₃:C, quartz, phosphors, BeO, CaF₂:Mn and CaSO₄.

7. The radiation measuring device according to anyone of the claims 1 to 6, wherein the at least one sensing arrangement (21) further comprises a converting layer (26) so as to convert non-ionizing radiation into ionizing radiation.

8. The radiation measuring device according to anyone of the claims 1 to 7, wherein the at least one sensing arrangement (21) comprises the optically stimulated luminescence material surrounding and contacting an optical fiber portion (43), or sprayed on a support (41).

9. The radiation measuring device according to anyone of the claims 1 to 7, wherein the at least one sensing arrangement (21) comprises the optically stimulated luminescence material forming a core (46) embedded in an optical fiber portion (45).

10. The radiation measuring device according to anyone of the claims 1 to 9, wherein a plurality of sensing arrangements (21) are disposed according to a matrix (72) for defining a two-dimensional image of the zone of interest (7, 8).

11. The radiation measuring device according to anyone of the claims 1 to 10, wherein the at least one sensing arrangement (21) is disposed on an arm (61) or a pad (70).

12. The radiation measuring device according to anyone of the claims 1 to 11, wherein the at least one sensing arrangement (21) further comprises a window (40) selective to a defined radiation wavelength range.

13. A method of measuring radiation comprising:
- an accumulation step in which a radiation measuring device (10) as claimed in any of the claims 1 to 12 is placed in an environment in which radiation (20) is to be measured over a defined accumulation delay;
- a light injecting step in which stimulation light (23) is directed towards a sensing arrangement (21) comprising an optically stimulated luminescence material (26), so as to optically stimulate emission of a luminescence light (24); and
- a measurement step in which a measured intensity of the luminescence light (24) that varies as a function of radiation accumulated in the optically stimulated luminescence material (26) of the radiation measuring device (10) is measured.

14. The radiation measuring method of claim 13, wherein the light injecting and measurement steps are performed after the defined accumulation delay has lapsed.

15. The radiation measuring method of claim 13 or 14, wherein the intensity of the accumulated radiation is estimated based on the measured intensity of the luminescence light (24) and calibration data.
